# DEMANDE DE BREVET EUROPEEN

(11) **EP 0 610 114 A1**
(43) Date de publication de la demande: **10.08.1994**
(21) Numéro de dépôt: 94400175.9
(22) Date de dépôt: 27.01.1994
(51) Int. Cl.: F23G 5/00, F23G 5/16, F23G 5/30, B09B 3/00

(54) **Procédé d'incinération de combustibles solides, notamment résidus urbains, à rejets solides et gazeux sensiblement neutres vis-à-vis de l'environnement**

(30) Priorité: 04.02.1993 FR 9301204
(71) Demandeur: T.I.R.U.- TRAITEMENT INDUSTRIEL DES RESIDUS URBAINS, F-75008 Paris (FR)
(72) Inventeur: Finet, Claude, F-92130 Issy-les-Moulineaux (FR)
(74) Mandataire: CABINET BONNET-THIRION

(57) **Abrégé**

Les déchets urbains (21) sont séchés et mis en combustion dans un foyer (2) à grille mécanique (22), en régime réducteur, pour réduire la formation de NOₓ. Les mâchefers achèvent de se consumer dans un puits (32), à la base duquel est disposé un moyen tel qu'une torche à plasma (35), pour vitrifier les mâchefers. Les gaz de combustion sont brûlés en présence d'air secondaire dans un foyer (5) à lit fluidisé circulant. Les fumées sont débarrassées de la partie majeure des cendres volantes dans un filtre (61) avant de traverser une chaudière (7) où elles se refroidissent. Au-delà les fumées passent dans une zone d'épuration (8) en soi classique, avant d'être évacuées par une cheminée (10). On obtient ainsi de très faibles rejets nocifs tant dans les fumées que dans les mâchefers. Les cendres volantes, collectées en aval du lit fluidisé (5) sont recyclées avec les mâchefers pour être vitrifiées. Les métaux lourds volatilisés dans les foyers sont récupérés par la purge (83).

## Description

L'invention a trait à un procédé d'incinération de combustibles solides, notamment résidus urbains, à rejets sensiblement neutres vis-à-vis de l'environnement, procédé suivant lequel les combustibles sont introduits dans un foyer à progression commandée, et mis en combustion au contact d'un flux d'air primaire avec émission de gaz de combustion contenant des fractions gazéifiées et des imbrûlés particulaires tandis que des fractions fixes se consument en donnant des mâchefers, et les gaz de combustion émis reçoivent un apport d'air secondaire pour oxyder les fractions gazéifiées combustibles et les imbrûlés particulaires en donnant naissance à des fumées avec des cendres volantes, les fumées passant ensuite dans un échangeur thermique pour céder de l'énergie puis dans une zone d'épuration où sont séparées et collectées des cendres volantes tandis que sont neutralisés des gaz agressifs.

Actuellement, en France, près de 40 % de déchets ménagers ou résidus urbains sont éliminés par incinération. Ce procédé d'élimination a atteint un niveau de qualité technique excellent, avec un rendement de combustion de 98 à 99 %, des teneurs en imbrûlés qui s'abaissent parfois à moins de 1 %, des rendements en énergie de 80 à 85 %, et des taux de disponibilité de 85 à 90 % pour les installations.

Parallèlement, les taux de rejets polluants ont été sérieusement réduits.

Toutefois, malgré les améliorations apportées, les installations d'incinération ont la réputation d'être polluantes, peut-être parce que la réduction des taux de rejets polluants va de pair avec une croissance des dimensions des installations et des tonnages traités.

Par ailleurs les procédés parallèles d'élimination de ces déchets ne semblent pas pouvoir supplanter l'incinération : la mise en décharge sera drastiquement restreinte dans les années à venir, n'étant autorisée que la mise en décharge de résidus neutres résultant des autres procédés d'élimination ; les techniques de tri (collectes sélectives par exemple) ne peuvent affecter que les déchets susceptibles de récupération, soit, au mieux, 15 à 20 % du tonnage total des résidus urbains ; le compostage ne pouvait s'appliquer, dans le meilleur des cas, qu'à 45 % du tonnage des déchets collectés, et pour certains polluants, tels les métaux lourds, le compostage ne réalise aucun progrès par rapport à l'incinération classique.

Il résulte que la réduction de la pollution liée à l'élimination des déchets urbains ne peut être obtenue par la suppression de l'incinération, et implique donc que les processus d'incinération soient améliorés pour donner des rejets sensiblement neutres pour l'environnement.

Ces rejets sont essentiellement de deux sortes, les rejets aériens dans l'atmosphère (gaz et vapeurs) et les rejets solides tels que les mâchefers et les cendres volantes.

Les rejets aériens se composent, en part majeure, d'azote, de dioxyde de carbone et de vapeur d'eau, et, en part mineure, de gaz et vapeurs polluants. Parmi ces polluants, certains sont déjà arrêtés en grande partie par des traitements appropriés :
poussières et métaux lourds particulaires ;
gaz chlorhydrique ;
du monoxyde de carbone et des hydrocarbures gazeux ;
des métaux lourds volatils (mercure).

Les traitements actuels sont susceptibles d'amélioration.

D'autres polluants gazeux devront faire l'objet d'interventions (oxydes d'azote, composés soufrés, dioxines et autres composés organiques). Parmi ceux-ci certains sont inévitables (poussières, métaux lourds volatils, oxydes de soufre) ; d'autres résultent des conditions de combustion (oxydes d'azote ou NOₓ, dioxines, CO, et divers composés organiques) ; on notera que, pour les composés soufrés, les conditions de combustion peuvent faire varier les taux relatifs de SH₂, SO₂ et SO₃.

Les rejets solides sont constitués par les mâchefers et les résidus d'épuration des fumées ; ils étaient, en général, tenus pour inertes vis-à-vis de l'environnement. Les mâchefers, notamment, après déferraillage, étaient souvent utilisés en travaux publics.

Mais des études récentes ont montré que ces résidus solides pouvaient relarguer, par lessivage à la pluie, des fractions solubles contenant principalement des chlorures, sulfates, et des métaux lourds à des taux qui pourront paraître excessifs dans un avenir prévisible.

L'objectif fixé à la présente invention est de réduire les rejets aériens et solides polluants à une valeur compatible avec les règles prévisibles à échéance d'une dizaine d'années.

A cet effet, l'invention propose un procédé d'incinération de combustibles solides, notamment résidus urbains, à rejets sensiblement neutres vis-à-vis de l'environnement, procédé suivant lequel les combustibles sont introduits dans un foyer à progression commandée, et mis en combustion au contact d'un flux d'air primaire avec émission de gaz de combustion contenant des fractions gazéifiées et des imbrûlés particulaires, tandis que des fractions fixes se consument en donnant des mâchefers, et les gaz de combustion émis reçoivent un apport d'air secondaire pour oxyder les fractions gazéifiées combustibles et les imbrûlés particulaires en donnant naissance à des fumées avec des cendres volantes, les fumées passant ensuite dans un échangeur thermique pour céder de l'énergie, puis dans une zone d'épuration où sont séparées et collectées des cendres volantes tandis que sont neutralisés des gaz agressifs, procédé caractérisé en ce que :
le flux d'air primaire est dosé en sorte que la combustion dans le foyer s'effectue en milieu réducteur ;
les mâchefers sont déversés, pour achever de se consumer, dans une zone de brasier avec une section terminale équipée d'un moyen d'injection d'énergie thermique propre à porter les mâchefers à fusion avant qu'ils soient évacués à travers un joint d'eau où ils sont éteints ;
les gaz de combustion sont injectés, conjointement avec l'air secondaire dans un foyer secondaire à lit fluidisé ;
les cendres volantes issues avec les fumées du foyer secondaire sont pour une part collectées en au moins un point en amont de la zone d'épuration ;
les cendres volantes collectées au point en amont de la zone d'épuration et dans celle-ci sont recyclées dans la zone de brasier en amont de sa section terminale.

La combinaison de la combustion en milieu réducteur dans le four à progression commandée avec l'oxydation des gaz de combustion dans le foyer à lit fluidisé circulant réduit la température des gaz de combustion et minimise ainsi la formation de NOₓ dans ce foyer tandis que le pouvoir calorifique des gaz de combustion est accru, et l'oxydation des fractions gazéifiées et des imbrûlés particulaires est très complète, en raison de la mise en contact intime des fractions combustibles et de l'air secondaire dans la masse du lit fluidisé circulant, à faible gradient de température. En conséquence les fumées issues du foyer à lit fluidisé sont à teneur faible en NOₓ, dioxines et furannes, tandis que les composés soufrés sont sous forme de SO₂ et SO₃, plus aisément captables par des produits basiques.

Simultanément, les cendres volantes qui accompagnent les fumées sont appauvries en fractions combustibles, et sont arrêtées dans le séparateur solide/gaz qui suit le foyer à lit fluidisé circulant, ce qui réduit l'encrassement et améliore les échanges thermiques.

Par ailleurs le déversement des mâchefers dans la zone de brasier, outre qu'il permet d'utiliser un foyer à progression commandée, plus court que dans les installations classiques, conduit à la formation d'une masse de mâchefers suffisamment poreuse pour qu'ils puissent finir de se consumer, et suffisamment dense pour qu'ils ne se refroidissent pas trop rapidement, cette masse se présentant progressivemnt devant le moyen d'injection thermique qui les porte à fusion en brûlant toute partie combustible qui pourrait subsister, et volatilisant toute partie susceptible de se volatiliser, les gaz formés de ce fait dans la section terminale accompagnant les fractions gazéifiées dans le foyer à lit fluidisé circulant. Les mâchefers en fusion tombent dans le joint d'eau en formant des fragments vitrifiés séparés les uns des autres par des surfaces de fractures dues aux chocs thermiques. La vitrification a pour effet d'insolubiliser l'essentiel des composés minéraux qui n'ont pas été volatilisés dans la section terminale de la zone de brasier. Les mâchefers vitrifiés et fragmentés peuvent être mis en décharge ou être utilisés en travaux publics sans inconvénients pour l'environnement.

Enfin, le recyclage des cendres volantes dans la zone de brasier a pour premier résultat de parfaire l'oxydation des fractions combustibles emportées par ces cendres, et de les enrichir en composants non oxydables, tandis que leurs composants fixes sont vitrifiés avec les mâchefers. En outre, les métaux lourds condensables accompagnent les cendres volantes lors de leur collecte, ces cendres volantes s'enrichissant en composés de métaux lourds au fur et à mesure que les fractions combustibles sont oxydées, et les fractions vitrifiables s'éliminent avec les mâchefers. On peut ainsi amener la teneur en métaux lourds des cendres volantes à une valeur suffisante pour que l'extraction des métaux lourds soit rentable.

De préférence, les mâchefers, avant d'être déversés dans la zone de brasier, sont criblés pour en éliminer des corps étrangers volumineux incombustibles. Il est relativement courant que, dans les déchets urbains, se trouvent des objets métalliques, tels que cadres de bicyclette, ossatures de sommier métallique, machines à coudre, ou des pierres. La fusion de tels corps étrangers serait aléatoire, nécessiterait des consommations d'énergie excessives, et pourrait en outre gêner la vitrification des mâchefers.

De façon préférée, on introduit dans le foyer à lit fluidisé circulant un composé pulvérisé contenant de l'oxyde de calcium en quantité suffisante pour sensiblement neutraliser les composés du soufre, essentiellement SO₂ et SO₃. Au contact des oxydes de soufre dans le lit fluidisé, l'oxyde de calcium (qui peut être ajouté sous forme de chaux vive, ou de calcaire qui se décompose en CaO et CO₂) donne des sulfites et sulfates de calcium, qui se retrouvent avec les cendres volantes, en réduisant efficacement les teneurs en oxydes de soufre des fumées.

Pour améliorer la collecte des cendres volantes dans les fumées avant que celles-ci passent dans l'échangeur thermique, on peut les faire passer dans un séparateur solide/gaz par exemple muni d'un filtre capable de supporter la température des fumées qui le traversent, et ainsi réduire encore l'encrassement de l'échangeur thermique.

Le plus fréquemment l'échangeur thermique sera une chaudière pour la production de vapeur. En effet, pour des puissances installées notables, la production de vapeur constitue le processus le plus efficace de récupération d'énergie, que la vapeur soit utilisée pour engendrer une puissance électrique, ou envoyée à des utilisateurs.

On pourra disposer en partie basse de chaudière une pluralité de trémies pour la collecte des cendres volantes, qui seront recyclées vers la zone de brasier avec les cendres volantes collectées en amont de la zone d'épuration et dans celle-ci. On remarquera que les condensations de métaux lourds auront tendance à s'accumuler dans ces trémies, la température des fumées décroissant à mesure qu'elles cèdent leur chaleur sensible à l'eau et à la vapeur de la chaudière.

Pour récupérer les cendres volantes enrichies en métaux lourds, on disposera une purge sur une canalisation par laquelle les cendres volantes collectées aux divers points du circuit des fumées pour être recyclées dans la zone de brasier.

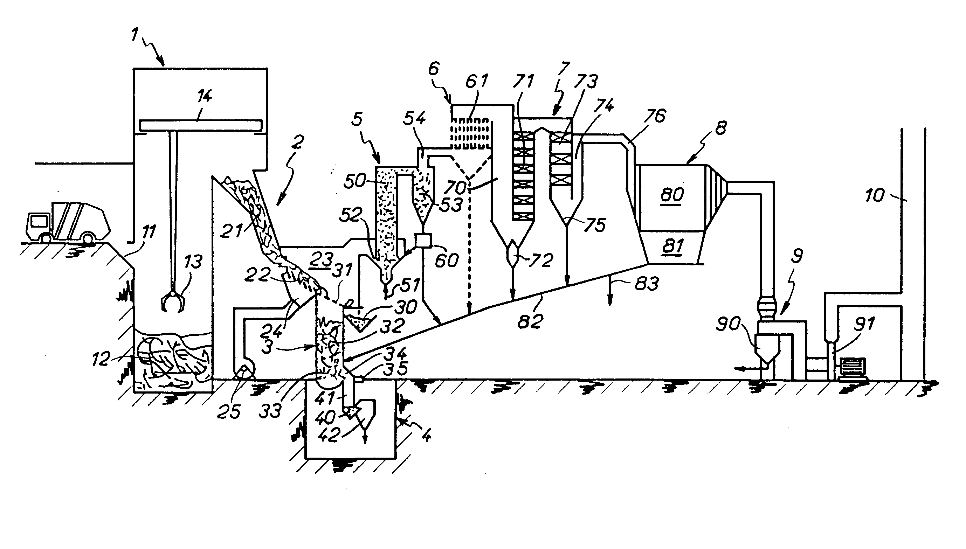

Des caractéristiques secondaires et les avantages de l'invention ressortiront d'ailleurs de la description qui va suivre à titre d'exemple illustré par la figure unique annexée.

Celle-ci représente une installation d'incinération de déchets urbains qui opère suivant le procédé de l'invention.

Cette installation comporte un silo 1, avec une rampe 11 par laquelle les déchets urbains, apportés par camions par exemple, sont déchargés pour former une réserve 12, d'où ils sont repris par un organe de préhension 13 d'un pont roulant 14.

Les résidus urbains sont engagés dans une trémie d'entrée 21 d'un foyer à progression commandée 2 dans son ensemble. Ce foyer 2 comporte une grille 22 inclinée, du type qui comprend des rangées étagées de barreaux alternativement fixes et mobiles de sorte que les résidus en combustion soient mus progressivement de l'amont vers l'aval de la grille 22. Sous cette grille est disposé un caisson de soufflage 24, alimenté en air comburant primaire par un ventilateur 25. La trémie d'entrée 21 et la grille 22 sont en soi classiques, la grille 22 étant toutefois raccourcie par rapport aux installations classiques car, comme on le verra plus loin, elle ne constitue pas dans sa partie aval support de la totalité de zone de brasier.

La grille est surmontée d'une chambre à fumée 23, où sont reçus les gaz de combustion des résidus sur la grille 22. La grille 22 est prolongée à son extrémité aval par un crible incliné 31, au travers duquel les mâchefers, résultant de la combustion de fractions fixes des déchets, sont déversés dans un puits 3 formant zone de brasier, tandis que, si des corps étrangers volumineux, notamment incombustibles, arrivent sur le crible 31, ils sont refusés et s'accumulent dans un cul-de-sac, d'où il seront évacués à travers un sas, à un moment approprié, vers une benne 30.

Les fractions fixes combustibles restant dans les mâchefers achèvent de se consumer dans la zone de brasier formée par le puits 3, où parvient de l'air primaire. La partie terminale inférieure du puits 33 forme creuset et comporte un ouvreau 34 en face duquel est disposé un moyen d'injection d'énergie thermique 35, tel qu'une torche à plasma, un électrobrûleur ou un oxybrûleur. Les mâchefers accumulés dans le puits 32 forment un magma dont la base est portée à fusion franche dans le creuset 33 et tombe, à travers l'ouvreau 34 et un conduit vertical 41, dans un bac 40 rempli d'eau, qui forme joint vers l'atmosphère pour éviter, soit que les gaz de combustion en surpression s'échappent avec les mâchefers vitrifiés, soit que de l'air pénètre par l'ouvreau 34 vers la chambre à fumée 23 si celle-ci se trouve en dépression.

Les mâchefers en fusion, qui forment un verre grossier, tombant dans l'eau du bac 40, se figent en une masse vitrifiée où les contraintes dues aux chocs thermiques provoquent une fragmentation, par le processus connu sous le nom d'étonnement d'un produit vitreux. La masse vitreuse fragmentée est périodiquement raclée pour être envoyée dans une trémie 42. Cette masse vitreuse, dont la composition se rapproche d'un clinker de ciment, est utilisable en travaux routiers, par exemple.

Les gaz de combustion et les imbrûlés particulaires issus tant de la couche de déchets en combustion sur la grille 22 que des mâchefers qui se consument dans le puits 3, et reçus dans la chambre 23 sont injectés dans un foyer à lit fluidisé circulant 5 dans son ensemble, à la base d'une tour qui contient le lit fluidisé. Celui-ci est constitué de grains calibrés de matériau réfractaire. De l'air secondaire est introduit à la base 51 au centre de la tour pour fluidiser les grains de matériau réfractaire, tandis que les gaz de combustion et du matériau réfractaire recyclé pénètrent sous une lèvre circonférentielle 52. Les gaz de combustion et l'air secondaire se trouvent en contact intime sur la hauteur de la tour, en raison des turbulences engendrées par la fluidisation du matériau réfractaire, de sorte que les fractions oxydables des gaz de combustion se combinent à l'oxygène de l'air secondaire. Le matériau réfractaire en grains qui constitue le lit fluidisé forme une masse à grande inertie thermique portée à **t**empérature élevée, de sorte que la combustion des fractions combustibles des gaz de combustion et des imbrûlés particulaires s'effectue à température sensiblement constante, cette combustion maintenant en température le lit fluidisé.

Avec l'air secondaire, on injecte en 51 une poudre de chaux en quantité dosée pour neutraliser les composés soufrés, qui, dans l'atmosphère oxydante du lit fluidisé, sont à l'état de SO₂ et SO₃ essentiellement, et donnent des sulfites et sulfates de calcium.

Les grains réfractaires du lit fluidisé débordent du sommet de la tour 50, et tombent dans un séparateur solide/gaz 53, ici du type cyclone. Les fumées issues de la tour 50 s'échappent par le conduit central 54, en se séparant du lit fluidisé et d'une part des cendres volantes dont elles étaient chargées.

Le conduit central 54 est muni de tubes évaporateurs reliés à la chaudière 7, afin de limiter la température des fumées.

A la base du cyclone 53 est disposé un crible 60, qui sépare les grains du lit fluidisé des cendres volantes déposées. Les grains de lit fluidisé sont recyclés à la base de la tour 50 par la lèvre circonférentielle 52, tandis que partie des cendres volantes pourront s'évacuer par le conduit 60a.

A la suite du conduit central 54, on a prévu ici, dans un corps de séparateur 6, un filtre 61, conçu pour arrêter des cendres volantes présentes dans le flux des fumées à haute température, et comportant des surfaces filtrantes réfractaires.

Le filtre 61 débouche dans un échangeur thermique 7, ici une chaudière, constituée de deux corps 70, 71 et 73, 74 en série. Le premier corps comprend un trajet descendant 70, puis un second trajet ascendant 71, où sont disposés la majorité des bouilleurs. Entre le trajet descendant 70 et le trajet ascendant 71, le premier corps est conformé en partie inférieure en trémie 72, pour la collecte de cendres volantes. Le second corps également comporte un trajet descendant 73 où sont situés des bouilleurs et un réchauffeur, puis un trajet ascendant 74. Ce second corps est également conformé en trémie 75 à la jonction des deux trajets 73 et 74, pour la collecte de cendres volantes. On notera que les fumées se refroidissent progressivement en traversant la chaudière 7, qui constitue échangeur thermique. En conséquence, les sections des trajets 70, 71, 73, 74 vont décroissant, pour maintenir la vitesse de circulation des fumées dans des limites convenables. Par ailleurs, le refroidissement progressif s'accompagnera de la formation de matières solides qui se condensent à partir d'éléments volatils présents dans les fumées.

Sortant de la chaudière 7, les fumées traversent une zone d'épuration 8 classique en soi, comprenant un caisson filtrant 80, et une trémie de collecte 81 de matières particulaires refusées par le filtre 80. On notera que c'est dans cette trémie 81 que se rassembleront l'essentiel des métaux lourds entraînés par les fumées, principalement sous forme d'oxydes et de chlorures métalliques (zinc, plomb, cadmium). Au-delà de la zone d'épuration 8, les fumées traversent, dans une section d'épuration ultime 9, un laveur 90, où sont retenus le chlorure d'hydrogène et le mercure qui n'ont pas été arrêtés dans le filtre 80, puis sont reprises par un ventilateur 91 qui les refoule dans une cheminée 10.

Les cendres volantes et autres matières solides condensées au refroidissement des fumées, collectées dans le cyclone 53 du foyer à lit fluidisé circulant, dans les trémies 72 et 75 de la chaudière 7, et de la trémie 81 de la zone d'épuration 8 sont recyclées vers la zone de brasier 3 en amont immédiat de l'ouvreau 34, via une canalisation de retour 82. Cette canalisation 82 est équipée d'une purge 83 située en aval immédiat de la trémie 81 de la zone d'épuration 8.

On va revenir sur des conditions opératoires des différentes zones de l'installation, qui conditionne le déroulement du procédé de l'invention.

Les résidus urbains déversés par la trémie 21 sur la grille 22 subissent un séchage avant d'entrer en combustion. La quantité d'air primaire envoyée au caisson de soufflage 24 sous la grille 22 est déterminée de telle façon que les gaz de combustion dans la chambre à fumée 23 contiennent une proportion élevée de CO et que la température du lit de combustible sur la grille 22 soit relativement basse, afin que la quantité d'oxydes d'azote (NOₓ) formée dans le lit soit très faible. La quantité d'air envoyée dans la zone de brasier en puits 32 est également déterminée pour que les mâchefers puissent achever de se consumer en conditions faiblement oxydantes. La fusion des mâchefers dans la section terminale ou creuset 33 de la zone de brasier 32 est conçue pour produire un minimum d'oxydes d'azote, l'atmosphère dans cette section terminale ne contenant que très peu d'oxygène, l'apport d'air étant réglé à la valeur juste nécessaire pour consumer les mâchefers.

Les gaz de combustion issus de la chambre 23 sont injectés, en même temps que l'air secondaire chargé de chaux à la base de la tour 50 du foyer à lit fluidisé circulant 5. Comme la combustion, au sein du lit circulant, des gaz de combustion et des combustibles particulaires se produit dans une gamme de température relativement étroite, en raison de l'inertie thermique de la masse de grains réfractaires du lit fluidisé, on peut opérer avec un excès d'air secondaire sans risquer d'augmenter la teneur en NOₓ ; en sortie 54, la teneur des fumées en CO est très faible ; par ailleurs le soufre est oxydé, ce qui favorise la captation du soufre sous forme sulfate.

La fusion des mâchefers et cendres volantes, dans le creuset 33 de la zone de brasier, assure l'insolubilisation des composants de verre, tandis que les fractions combustibles ultimes des mâchefers sont brûlées, et les composants volatils distillés.

Par ailleurs, les pulvérulents et condensats rassemblés dans la trémie 81 de la zone d'épuration 8, où les fumées sont à basse température, sont progressivement enrichis en métaux lourds du fait du recyclage. En sortie de la purge 83, on obtiendra une matière première riche en métaux lourds, qui pourront être extraits et séparés à un faible coût.

On notera que, en réduisant le taux d'imbrûlés, cendres volantes et composés agressifs en amont de la chaudière 7, on réduit l'encrassement de la chaudière, et l'on améliore à moyen terme le rendement thermique de l'installation. Et, de façon seconde, on réduit la corrosion des éléments de chaudière.

Bien entendu, l'invention n'est pas limitée à l'exemple décrit, mais en embrasse toutes les variantes d'exécution dans le cadre des revendications.

Ainsi, le foyer à progression commandée ne sera pas nécessairement un foyer à grille avec des barreaux alternativement fixes et mobiles en va-et-vient, mais des foyers avec des grilles en nappes sans fin, ou des fours tournants ; on pourra envisager que les gros objets ne soient pas séparés des mâchefers avant l'entrée dans la zone de brasier, mais soient fondus avec les mâchefers si la puissance des torches 35, nécessaire à la marche normale, est suffisante, ou, tout au moins, que seuls des gros objets de taille exceptionnelle soient séparés des mâchefers. Enfin, l'échangeur thermique pourra être d'un type quelconque, et notamment une chaudière à corps unique ou multiples, avec des trajets aussi bien longitudinaux que verticaux à sens alterné.

## Revendications

1. Procédé d'incinération de combustibles solides, notamment résidus urbains, à rejets sensiblement neutres vis-à-vis de l'environnement, procédé suivant lequel les combustibles sont introduits dans un foyer (2) à progression commandée, et mis en combustion au contact d'un flux d'air primaire (24) avec émission de gaz de combustion contenant des fractions gazéifiées et des imbrûlés particulaires, tandis que des fractions fixes se consument en donnant des mâchefers, et les gaz de combustion émis reçoivent un apport d'air secondaire pour oxyder les fractions gazéifiées combustibles et les imbrûlés particulaires en donnant naissance à des fumées avec des cendres volantes, les fumées passant ensuite dans un échangeur thermique (7) pour céder de l'énergie, puis dans une zone d'épuration (8) où sont séparées et collectées des cendres volantes tandis que sont neutralisés des gaz agressifs, procédé caractérisé en ce que :
le flux d'air primaire (24) est dosé en sorte que la combustion dans le foyer s'effectue en milieu réducteur ;
les mâchefers sont déversés, pour achever de se consumer, dans une zone de brasier (3) avec une section terminale (33) équipée d'un moyen d'injection d'énergie thermique (35) propre à porter les mâchefers à fusion avant qu'ils soient évacués à travers un joint d'eau (40) où ils sont éteints ;
les gaz de combustion sont injectés, conjointement avec l'air secondaire (51) dans un foyer (5) secondaire à lit fluidisé ;
les cendres volantes issues avec les fumées du foyer secondaire (5) sont pour une part collectées en au moins un point (6) en amont de la zone d'épuration (8) ;
les cendres volantes collectées au point (6) en amont de la zone d'épuration (8) et dans celle-ci sont recyclées dans la zone de brasier (3) en amont de sa section terminale (33).

2. Procédé suivant la revendication 1, caractérisé en ce que, avant d'être déversés dans la zone de brasier (3), les mâchefers sont criblés pour éliminer des corps étrangers volumineux.

3. Procédé suivant l'une des revendications 1 et 2, caractérisé en ce que le lit fluidisé du foyer secondaire (5) est un lit fluidisé circulant.

4. Procédé suivant la revendication 3, caractérisé en ce que l'on introduit dans le foyer (5) à lit fluidisé circulant un composé pulvérisé contenant de l'oxyde de calcium en quantité suffisante pour sensiblement neutraliser les composés de soufre.

5. Procédé suivant une quelconque des revendications 1 à 4, caractérisé en ce que les fumées issues du foyer secondaire traversent, avant de passer dans l'échangeur thermique, un séparateur solide/gaz (6) où est collectée une part majeure de cendres volantes.

6. Procédé suivant la revendication 5, caractérisé en ce que le séparateur solide/gaz (6) disposé entre le foyer secondaire (5) et l'échangeur thermique (7) comporte un filtre (61) propre à supporter des températures correspondant à celles des fumées en amont de l'échangeur (7).

7. Procédé suivant une quelconque des revendications 1 à 6, caractérisé en ce que l'échangeur thermique est une chaudière pour la production de vapeur.

8. Procédé suivant la revendication 7, caractérisé en ce que la chaudière présente, en partie basse, une pluralité de trémies (72, 75) de collecte de cendres volantes, celles-ci étant recyclées dans la zone de brasier (3) avec les cendres volantes collectées en amont (6) de la zone d'épuration (8) et dans celle-ci.

9. Procédé suivant une quelconque des revendications 1 à 8, caractérisé en ce que le recyclage des cendres volantes vers la zone de brasier (3) s'effectue par une canalisation (82) équipée d'une purge (83).
